(19) Europäisches Patentamt
European Patent Office
Office européen des brevets

(11) Publication number: **0 163 825**
**B1**

(12) # EUROPEAN PATENT SPECIFICATION

(45) Date of publication of patent specification: **07.09.88**

(51) Int. Cl.[4]: **C 08 K 5/10**, C 08 K 5/20, C 08 L 27/12, C 07 C 69/52, C 07 C 103/56, C 08 F 259/08

(21) Application number: **85103137.7**

(22) Date of filing: **19.03.85**

(54) **Cross-linking agents for radiation cross-linking fluoropolymers.**

(30) Priority: **09.04.84 US 597908**

(43) Date of publication of application:
**11.12.85 Bulletin 85/50**

(45) Publication of the grant of the patent:
**07.09.88 Bulletin 88/36**

(84) Designated Contracting States:
**DE FR GB IT**

(56) References cited:
**EP-A-0 056 189**
**DE-A-3 314 786**
**US-A-2 944 995**
**US-A-3 894 118**
**US-A-4 028 093**

**CHEMICAL ABSTRACTS, vol. 66, no. 2, 9th January 1967, page 1002, abstract no. 10539t, Columbus, Ohio, US; J.W. LYNN et al.: "Polyol esters of 3-butenoic acid", & J. CHEM. ENG. DATA 8(3), 445(1963)**

(73) Proprietor: **Ausimont, U.S.A., Inc.**
**44 Whippany Road**
**CN 1838, Morristown, N.J. 07960 (US)**

(72) Inventor: **Galle, James Edwin**
**c/o Allied Corporation P.O. Box 2245R**
**Morristown, NJ 07960 (US)**
Inventor: **Mares, Frank**
**c/o Allied Corporation P.O. Box 2245R**
**Morristown, NJ 07960 (US)**

(74) Representative: **Baillie, Iain Cameron et al**
**c/o Ladas & Parry Isartorplatz 5**
**D-8000 München 2 (DE)**

(56) References cited:
**CHEMICAL ABSTRACTS, vol. 83, no. 11, 15th September 1975, page 493, abstract no. 96254y, Columbus, Ohio, US; J.W. HAGEMANN et al.: "Polymorphism in single-acid triglycerides of positional and geometric isomers of octadeceonoic acid", J. AM. OIL CHEM. SOC. 1975, 52(6), 204-7**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

EP 0 163 825 B1

**Description**

This invention is in the field of radiation crosslinking polymers; more particularly, the invention relates to a crosslinking agent useful in the radiation crosslinking of fluoropolymers.

Fluoropolymers, particularly those having high melting points, possess a combination of mechanical, dielectric and chemical properties which make them particularly useful as electrical insulation material. In order to utilize these fluoropolymers under high temperatures or overload conditions, crosslinking of the fluoropolymers is desirable. Crosslinking of high temperature resistant fluoropolymers is difficult since the polymers are normally processed at temperatures which are too high for most chemical crosslinking agents. This is substantiated in Reissue Patent No. 31,103 and U.S. Patent No. 3,894,118, both hereby incorporated by reference. It is particularly noted in the '118 patent that it is not feasible to melt process fluoropolymers, such as ethylene-chlorotrifluoroethylene copolymers, prior to crosslinking by employing most known chemical crosslinking agents and techniques, since the chemical crosslinking systems prereact during the high temperature melt processing required for extrusion of the polymers. As an alternative to chemical crosslinking, the radiation crosslinking of polymers has been studied. It has been found that it is highly desirable and commercially important to provide suitable radiation sensitizers, also known as crosslinking coreactants or crosslinking agents, for use with fluoropolymers which would enable crosslinking of these polymers with moderate doses of irradiation subsequent to high temperature processing as in extrusion and certain molding techniques. Such radiation sensitizers are also known as prorads.

The prior art teaches the existence of a variety of radiation sensitizers. Examples of the prior art are U.S. Patent Nos. 3,970,770; 3,985,716; 3,911,192; 3,894,118; 3,840,619; 3,763,222; 3,995,091; and Re. 31,103.

SUMMARY OF THE INVENTION

In one aspect the invention provides a composition comprising a fluoropolymer and a radiation sensitizer having the formula

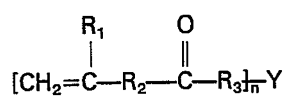

wherein

Y is a hydrocarbon;

$R_3$ is —O—, >NR, or mixtures thereof;

$R_2$ is an alkylene diradical having 2 to 18 carbon atoms or a cycloalkylene, aralkylene or arylene diradical having 1 to 16 carbon atoms;

$R_1$ is H or methyl;

R is H or an alkyl group having from 1 to 4 carbon atoms; and

n is from 2 to 6.

In another aspect the invention provides a process comprising the step of irradiating a composition comprising a fluoropolymer selected from the group consisting of ethylene-tetrafluoroethylene copolymers, ethylene-chlorotrifluoroethylene copolymers, polyvinylidene fluoride homopolymers, tetrafluoroethylene-vinylidene fluoride copolymers, tetrafluoroethylene-hexafluoropropylene copolymers and vinylidene fluoride-hexafluoropropylene polymers and a radiation sensitizer having the formula

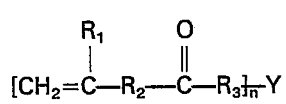

wherein

Y is a hydrocarbon;

$R_3$ is —O—, >NR, or mixtures thereof;

$R_2$ is a diradical selected from alkylene, cycloalkylene, aralkylene or arylene diradicals having 1 to 16 carbon atoms;

$R_1$ is H or methyl;

R is H or an alkyl group having from 1 to 4 carbon atoms; and

n is from 2 to 6.

The radiation sensitizer is useful in a composition comprising a fluoropolymer. Preferred fluoropolymers include ethylene-tetrafluoroethylene copolymers, ethylene-chlorotrifluoroethylene copolymers, polyvinylidene fluoride homopolymers, tetralfuoroethylene-vinylidene fluoride copolymers, tetrafluoroethylene-hexafluoropropylene copolymers, and vinylidene fluoride-hexafluoropropylene copolymers.

The present invention also includes a method comprising the step of irradiating the above composition. The above composition can be melt processed followed by irradiation. The radiation

sensitizer of the above composition is particularly stable during melt processing. Melt processing can include melt blending, such as extruder blending, and melt forming, such as wire coating.

DESCRIPTION OF THE PREFERRED EMBODIMENTS

The present invention includes a radiation sensitizer, a composition comprising the radiation sensitizer and a fluoropolymer, and a process comprising the step of irradiating the composition.

The hydrocarbon radical Y is preferably an alkyl, cycloalkyl, aralkyl or aryl diradical. The preferred radical Y can be derived from the compounds including ethylene glycol, propylene glycol, 1,3-propanediol, butanediol, pinocol, glycerol, pentaerythritol, cyclopentanediol, cyclohexanediol, hydrobenzoin, hydroquinone, catechol, resorcinol, and tetrahydroxynaphthalene. Compounds in which $R^3$ is an amine radical can be derived from compounds including but not limited to, tetramethylenediamine, phenylenediamine, triamino benzene, tetraaminonaphthalene, aminoethanol, N-methyl derivatives thereof such as N-methylaminoethanol and N′,N″,N‴-trimethyltriaminobenzene, N,N′-dimethyl-ethylenediamine and N,N′-dimethyldiaminohexane.

$R_1$ is preferably H, and $R_2$ is preferably an alkylene diradical having from 2 to 18, and preferably 4 to 10 carbon atoms.

The following table illustrates preferred radiation sensitizers by chemical name, formula, and appearance at ambient conditions.

TABLE 1

| | Radiation Sensitizer | Structure | Appearance |
|---|---|---|---|
| I | Butanediol di-10-undecenoate | $C_4H_8[OCO(CH_2)_8CH=CH_2]_2$ | Clear Liquid |
| II | Pentaerythritol tetra-10-undecenoate | $C[CH_2OCO(CH_2)_8CH=CH_2]_4$ | Yellow Liquid |
| III | N,N′-diundecenoyl-N,N-dimethyl-hexamethylenediamine | $(CH_2)_6[N(CH_3)-C(=O)-(CH_2)_8CH=CH_2]_2$ | Yellow Liquid |

The radiation sensitizers of the present invention are particularly useful in fluoropolymer compositions. The radiation sensitizers enhance the crosslinking of fluoropolymers. The fluoropolymer compositions containing the radiation sensitizers of the present invention have been found to be able to be processed, particularly melt processed, such as being extruded, wire coated, or molded at temperatures of 200°C or greater and, in particular, greater than 250°C. The radiation sensitizers have been found to be stable at high temperatures yet aid in crosslinking the fluoropolymers upon exposure to radiation.

Fluoropolymers with which the radiation sensitizers of the present invention can be used include homopolymers, copolymers and terpolymers, such as ethylene-tetrafluoroethylene copolymers, ethylene-chlorotrifluoroethylene copolymers, polyvinylidene fluoride homopolymers, tetrafluoroethylene-vinylidene fluoride copolymers, tetrafluoroethylene-hexafluoropropylene copolymers and vinylidene fluoride-hexafluoropropylene copolymers. The fluoropolymers can contain nominal amounts, up to 10%, of other copolymerizable comonomers, including propylene, isobutylene, vinyl fluoride, hexafluoropropylene, tetrafluoroethylene, vinylidene fluoride, perfluoro-vinyl ether, acrylic acid, methacrylic acid and their esters, perfluoroalkyl ethylene hexafluoroisobutylene.

The composition of the present invention can contain additional additives, such as fillers, including silica and carbon black, stabilizers such as calcium oxide, antioxidants, coloring agents, additional plasticizers and/or additional crosslinking agents.

The present invention also includes a process of irradiation of the above composition. The process is particularly useful in irradiating a composition which has been processed at high temperatures, greater than 200°C and greater than 250°C. The radiation sensitizers of the present invention have been found to be particularly stable during melt processing at elevated temperatures so that upon completion of the melt processing, the melt processed material, including melt formed articles such as molded or extruded articles, can be irradiated and crosslinked with the aid of the radiation sensitizer.

Typically, the radiation can be gamma radiation supplied from a cobalt 60 source or radiation supplied from electron beam sources. Generally, the radiation contemplated in the process of the present invention is ionizing radiation of sufficiently high energy to penetrate the thickness of the polymer being treated and produce radicals by cleavage of bonds. The ionizing radiation can consist of X-rays, gamma rays, or a beam of electrons, protons, deuterons, alpha-particles, beta-particles or combinations thereof. Generally, the energy level of the radiation is at least 500,000 electron volts, and preferably from 1 to 2 Mev, although any energy level can be used which penetrates the thickness of the polymer being irradiated under the atmospheric conditions employed. For the fluoropolymers which are preferred in the present invention, the dosage or radiation to be effective to obtain improved properties, such as high temperature tensile

properties, is generally from 2 to 50 MRADS. Below the lower amount, the improvement is not appreciable and above the upper amount, the polymer properties become adversely affected. Preferably, the composition is subjected to from 5 to 30 MRADS. For chlorotrifluoroethylene containing copolymers, the general range of radiation is from 8 to 50 MRADS and preferably 10 to 20 MRADS.

The temperature of the polymer being irradiated is not important, but is generally less than 60°C, with ambient temperature, 20—25% being most convenient. Usually, the irradiation is conducted with the polymer contained in an inert atmosphere; however, irradiation can be conducted in air with some sacrifice and efficiency in the effect of the radiation. The polymer can be irradiated by conventional methods, i.e., the polymer is typically irradiated after fabrication into a final form, such as film, fiber, tube or coating such as on wire. The irradiation can be carried out by passing the fabricated polymer at a constant rate through a field of radiation. For example, a polymer can be extruded onto a wire, cooled and the resulting coated wire subjected to irradiation. The wire so extruded has been found useful at temperatures as high as 240°—250°C. Benefits of irradiation are disclosed in U.S. Patent No. Re. 28,628, reissued November 25, 1975, hereby incorporated by reference.

Although a wide variety of suitable radiation sensitizers for fluoropolymers are known to the prior art, most known materials pose problems when the polymer must be processed at a high temperature, e.g., greater than 200°C, especially greater than 250°C, prior to being subjected to irradiation. Conventionally, the polymer plus radiation sensitizer plus other additives (e.g., fillers, antioxidants, etc.) are blended together as homogeneously as possible and then formed, as by molding or extrusion, such as extrusion coating of conductor, to form a jacketed wire. The formed article, e.g., the jacketed wire, is then irradiated to crosslink the polymer insulation. Some of the most desirable polymers require relatively high temperatures (e.g., in excess of 250°C) for effective extrusion or molding. Subjecting many known radiation sensitizers to such temperatures causes severe problems, i.e., much of the radiation sensitizer is lost through evaporation and/or the prorad undergoes thermally induced homopolymerization or degradation. In such cases, the radiation sensitizer is no longer available to effect radiation induced crosslinking of the polymer. Also, where thermally induced homopolymerization has occurred, this radiation sensitized homopolymer is present as an undesirable and frequently marginally stable impurity. The compounds of the present invention have both a low volatility and a limited tendency to homopolymerize when subjected to temperatures even in excess of 250°C. They are, however, highly effective as crosslinking agents for fluoropolymers when subjected to ionizing radiation. The compounds of the present invention are, therefore, particularly useful for high melting fluoropolymers such as polyvinylidene fluoride, ethylene-chlorotrifluoroethylene copolymers, and ethylene tetrafluoroethylene copolymers.

The radiation sensitizers of the present invention are made by reacting a polyfunctional material which is a polyfunctional alcohol or amine with a carboxylic acid or its halide, the carboxylic acid group having a terminal unsaturation and having the formula

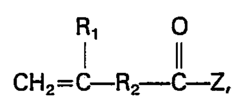

where Z is OH or a halide such as Cl.

Typically, the reaction could be an esterification of an acid having terminal unsaturation with polyfunctional alcohol. Alternatively, the acid can be reacted with a polyfunctional amine. An acid chloride can be used instead of an acid.

Several examples are set forth below to illustrate the nature of the invention and the manner of carrying it out. All parts are by weight unless otherwise indicated.

Example 1

Example 1 illustrates the preparation of pentaerythritol-tetra-10-undecenoate.

A suspension of 13.6 g of pentaerythritol was made in 175 ml of pyridine to which 89.1 g of 10-undecenoyl chloride was added dropwise. During the addition, the temperature was maintained between 10 and 20°C by means of an ice bath. The addition funnel was rinsed with an additional 25 ml of pyridine and the mixture stirred an additional two hours at room temperature. The reaction mixture was mixed with 500 ml of diethyl ether and extracted twice with 200 ml portions of water. This was followed by washing the ether solution with 100 ml portions of 5% HCl solution until the extract was acidic. The ether layer was then washed twice with 200 ml portions of water and twice with 100 ml portions of 5% $NaHCO_3$ solution. Drying ($MgSO_4$) and evaporation of the ether layer afforded 86 g of crude product. This was freed of volatile impurities by heating it in a bulb-to-bulb distillation apparatus for 15 minutes at 250°C (oven) at 0.1 mm pressure. The residue (77 g, 96% yield) was substantially pure pentaerythritol tetra-10-undecenoate.

Example 2

A composition was made using the radiation sensitizer, pentaerythritol-tetra-10-undecenoate prepared in Example 1. The composition was made with one kilogram of ethylene chlorotrifluoroethylene copolymer having a resin density of 1.67 grams per milliliter, a melt index of 1.5 grams per 10 minutes measured according to the ASTM D-3275 type 2 test. The ethylene-chlorotrifluoroethylene copolymer was in powder

form and obtained as HALAR® 3001 E-CTFE copolymer powder manufactured by Allied Corporation. The copolymer had about 49 to 51 mole percent ethylene and a corresponding amount of chlorotrifluoroethylene monomer. The composition contained 50 grams of pentaerythritol-tetra-10-undecenoate. The composition further contained 15 grams of pulverized calcium oxide. The components were mixed in a 2 liter round bottom flask with 850 milliliters of hexane based solvent. The hexanes were removed in a vacuum at a maximum temperature of about 1000°C. The resulting dry powder was extruded and pelletized.

Examples 3—4

The following examples illustrate compositions containing radiation sensitizers of the present invention. The compositions contained ethylene-chlorotrifluoroethylene copolymer of the type described in Example 2. The radiation sensitizers evaluated were radiation sensitizers I and II as listed in Table 1. Example 3 contained five parts per hundred of resin of radiation sensitizer I and Example 4 contained five parts per hundred of resin of radiation sensitizer II.

In each of the example compositions, the radiation sensitizer and the polymer were both in powder form and were mixed in a high intensity Henschel FM10 mixer at 2500 rpm for 4 minutes. The dry blends were then extruded using the Haake 2.54 cm, (1 inch) single screw extruder having an L/D ratio of 3/1. The extrusion conditions were Zone 1—225°C; Zone 2—235°C; Zone 3—245°C; die-225°C with the extruder operating 64 rpm. The pellets were formed into plaques 12.7 × 12.7 × 0.16 cm (by 5 by 1/16 inches) by compression molding at 253°C. The plaques were exposed to gamma radiation and electron beam radiation. In exposing the plaques to gamma radiation, a sample plaque was put into a container and exposed to a cobalt 60 source. The cobalt 60 source exposed the sample to 10 MRAD doses.

Other samples were exposed to electron beam radiation. The plaques were put on a flat tray and passed under an electron beam curtain. The plaques were exposed to approximately 3.3 MRADS per pass. After each pass the plaques were turned over and passed again. The plaques were passed under the electron beam curtain three times for a total dosage of about 10 MRADS.

Microtensile bars were cut from the samples which had been exposed to the radiation in accordance with ASTM-3275. Tensile and elongation strength were measured using an Instron. The samples were clamped into the Instron and heated to 200°C for 15 minutes, after which the tensile was tested at a draw speed of 2 inches per minute.

Copper wire was extrusion coated with the composition of each of the above examples. Sixteen gauge copper wire was extrusion coated with a composition to a thickness of 0.254 mm (10 mil). The extruder was a single screw extruder having an L/D ratio of 24/1 with a wire coating attachment. The extruder was generally run at a 280°C melt temperature. Samples of the extrusion coated wire were exposed to a cobalt 60 gamma radiation source in the same manner as the plaques were. Samples of the extrusion coated wire were exposed to electron beam radiation in the same manner as the plaques with the exception that the wire was rotated 120°C after each 3.3 MRAD pass.

The coated wire was tested according to the Modified Military Specification 22759/16. A length of wire was hung over a rod 2.54 cm (one inch) in diameter with a 908 g (2 lb.) weight hanging from each end of the wire. A short term (ST) aging test was conducted at 230°C for seven hours and a long term (LT) aging test conducted at 210°C for seven days. After completion of the test, the wire was straightened out and visually inspected for cracking. The wire was cooled to room temperature for one hour prior to straightening. If a wire showed no cracking, it passed the test (P). If the wire had even one crack it failed the test (F).

The plaques and wire were exposed to both gamma and electron beam radiation for 10 MRADS and 20 MRADS. The testing was conducted and elongation data and long and short term aging data are summarized in the following Table 2.

TABLE 2

| | Ex. 3 | Ex. 4 |
|---|---|---|
| E-CTFE | 100 | 100 |
| I, $C_4H_8[O\overset{O}{\overset{\|}{C}}(CH_2)_8CH{=}CH_2]_2$ | 5 | — |
| II, $C[CH_2O\overset{O}{\overset{\|}{C}}(CH_2)_8CH{=}CH_2]_4$ | — | 5 |
| % ELONG @ 200°C | | |
| 10 MRAD Co 60 | 90 | 70 |
| 20 MRAD Co 60 | 70 | 50 |
| 10 MRAD electronbeam | 150 | 180 |
| 20 MRAD electronbeam | 400 | 350 |
| LT Aging | | |
| 10 MRAD Co 60 | F | P |
| 20 MRAD Co 60 | F | P |
| 10 MRAD electron beam | F | F |
| 20 MRAD electron beam | P | P |
| ST Aging | | |
| 10 MRAD Co 60 | P | P |
| 20 MRAD Co 60 | P | F |
| 10 MRAD electron beam | P | P |
| 20 MRAD electron beam | P | P |

Examples 5—9

Thermogravimetric analysis was conducted in an argon atmosphere on radiation sensitizers I, II, and III as shown in Table 1. Thermogravimetric analysis is the measurement of weight loss upon heating. The analysis was done at a 20°C per minute heating rate and it was also done at constant temperatures of 250°C and 300°C. The comparative was done on an allylimide having the formula:

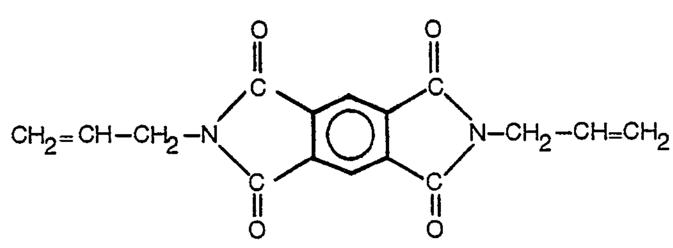

TABLE 3

| Ex. | Rad Sensitizer | Thermogravimetric Analysis in Argon Cumulative % Weight Loss @ C° | | | | | | |
|---|---|---|---|---|---|---|---|---|
| | | 100 | 200 | 250 | 300 | 350 | 400 | 540 |
| Comp. 1 | | 0 | 0.1 | 1.2 | 8.7 | 53.3 | 98.4 | 98.6 |
| 6 | I | 0 | 0.5 | 2.4 | 11.6 | 61.3 | 97 | 98.4 |
| 7 | II | 0 | 0.1 | 0.2 | 0.3 | 1.1 | 4.1 | 9.8 |
| 8 | III | 0.3 | 0.8 | 1.3 | 2.8 | 8.5 | 44.4 | 77.4 |

TABLE 3 (continued)

| Ex. | Rad Sensitizer | Cumulative % Weight Loss @ 250°C | | | @ 300°C | | |
|---|---|---|---|---|---|---|---|
| | | 10 min. | 20 min. | 30 min. | 10 min. | 20 min. | 30 min. |
| Comp. 1 | | 9.1 | 24.3 | 40 | 46 | 91 | |
| 6 | I | 8.9 | 19 | 28.6 | | | |
| 7 | II | 0.3 | 0.4 | 0.5 | 0.8 | 1.9 | 2.7 |
| 8 | III | 4.0 | 6.2 | 8.3 | 15.6 | 35 | 50.8 |

A review of the results shows that the thermostability and/or volatility of the experimental radiation sensitizers was satisfactory as compared to a known satisfactory radiation sensitizer. In particular, radiation sensitizer II had extraordinary low volatility and good stability even up to 450°C. All of the examples and the comparative had satisfactory stability and volatility even to 300°C, which is generally higher than the temperature at which fluoropolymers are melt processed.

Example 10

Dynamic mechanical analysis was conducted on a composition containing ethylene-chlorotrifluoroethylene copolymer of the type used in Example 2 and the radiation sensitizer II (pentaerythritol tetra ester). A comparative of 100% ethylene-chlorotrifluoroethylene copolymer was used. The examples were molded into plaques in the same manner as in Example 2. The dynamic storage modulus (E′) and the dynamic modulus (E″) were measured. Plaques were made to measure the dynamic storage modulus E′ versus temperature and the damping factor which is the ratio of E″/E′ versus temperature. Both the example and comparative reveal three major transitions: minus 50°C, 75°C and 135°C. A peak at 75°C is thought to be the last transition point of ethylene-chlorotrifluoroethylene copolymer. Compared to the comparative, the example composition containing the radiation sensitizer did not exhibit any additional peak which could be attributed to the radiation sensitizer. There is a small but reproduceable difference in the glass transition temperature. The example composition has a glass transition temperature of 2 to 5°C lower than the glass transition temperature of the comparative and its glass transition region is slightly broader which indicates phase mixing between the ethylene-chlorotrifluoroethylene copolymer and the radiation sensitizer. Transmission electron microscopy (TEM) supported the fact that the radiation sensitizer does not exist in a separate phase. Both techniques suggest that the polymer and the additive are compatible.

While exemplary embodiments of the invention have been described, the true scope of the invention is to be determined from the following claims.

**Claims**

1. A composition comprising a fluoropolymer and a radiation sensitizer having the formula

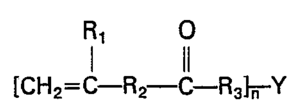

wherein

Y is a hydrocarbon;

$R_3$ is —O—, >NR, or mixtures thereof;

$R_2$ is an alkylene diradical having 2 to 18 carbon atoms or a cycloalkylene, aralkylene or arylene diradical having 1 to 16 carbon atoms;

$R_1$ is H or methyl;

R is H or an alkyl group having from 1 to 4 carbon atoms; and

n is from 2 to 6.

2. The composition of claim 1 wherein the fluoropolymer is selected from the group consisting of ethylene-tetrafluoroethylene copolymers, ethylene-chlorotrifluoroethylene copolymers, polyvinylidene fluoride homopolymers, tetrafluoroethylene-vinylidene fluoride copolymers, tetrafluoroethylene-hexafluoropropylene copolymers and vinylidene fluoride-hexafluoropropylene polymers.

3. The composition of claim 1 wherein Y is selected from the groups consisting of alkyl, cycloalkyl, aralkyl, and aryl radicals.

4. The composition of claim 1 wherein the polyfunctional radical combination of $R_3$—Y is derived from the group of compounds consisting of ethylene glycol, propylene glycol, 1,3-propanediol, butanediol, pinocol, glycerol, pentaerythritol, cyclopentanediol, cyclohexanediol, hydrobenzoic, hydroquinone, catechol, resorcinol, and tetrahydroxynaphthalene.

5. The composition of claim 1 wherein the polyfunctional radical combination of $R_3$—Y is derived from the group of compounds consisting of tetramethylenediamine, phenylenediamine, tetraaminonaphthalene, triaminobenzene, aminoethanol and N-methyl derivatives thereof.

6. The composition of claim 1 wherein $R_1$ is H and $R_2$ is an alkylene group having from 2 to 18 carbon atoms.

7. The composition of claim 1 wherein $R_2$ is an alkylene group having from 4 to 10 carbon atoms.

8. The composition of claim 1 wherein $R_2$ is an alkylene group having 8 carbon atoms.

9. A process comprising the step of irradiating a composition comprising a fluoropolymer selected from the group consisting of ethylene-tetrafluoroethylene copolymers, ethylene-chlorotrifluoroethylene copolymers, polyvinylidene fluoride homopolymers, tetrafluoroethylene-vinylidene fluoride copolymers, tetrafluoroethylene-hexafluoropropylene copolymers and vinylidene fluoride-hexafluoropropylene polymers and a radiation sensitizer having the formula

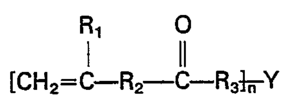

wherein

Y is a hydrocarbon;

$R_3$ is —O—, >NR, or mixtures thereof;

$R_2$ is a diradical selected from alkylene, cycloalkylene, aralkylene and arylene diradicals having 1 to 16 carbon atoms;

$R_1$ is H or methyl;

R is H or an alkyl group having from 1 to 4 carbon atoms; and

n is from 2 to 6.

10. The process of claim 9 further comprising the step of melt processing the composition prior to the step of irradiation.

**Patentansprüche**

1. Zusammensetzung mit einem Fluorpolymer und einem Strahlungssensibilisator der Formel

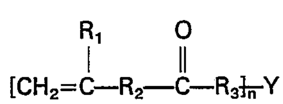

in der

Y ein Kohlenwasserstoff ist,

$R_3$ —O—, >NR oder ein Gemisch derselben ist,

$R_2$ ein Alkylendiradikal mit 2 bis 18 Kohlenstoffatomen oder ein Cycloalkylen-, Aralkylen- oder Arylendiradikal mit 1 bis 16 Kohlenstoffatomen ist;

$R_1$ H oder Methyl ist.

R H ist oder eine Alkylgruppe mit 1 bis 4 Kohlenstoffatomen und

m gleich 2 bis 6 ist.

2. Zusammensetzung nach Anspruch 1, dadurch gekennzeichnet, daß das Fluorpolymer aus der Gruppe ausgewählt ist, die aus den Ethylen-Tetrafluorethylen-Copolymeren, den Ethylen-Chlortrifluorethylen-Copolymeren, den Polyvinylidenfluorid-Homopolymeren, den Tetrafluorethylen-Vinylidenflourid-Copolymeren, den Tetrafluorethylen-Hexafluorpropylen-Copolymeren und den Vinylidenfluorid-Hexafluorpropylen-Polymeren besteht.

3. Zusammensetzung nach Anspruch 1, dadurch gekennzeichnet, daß Y aus der Gruppe ausgewählt ist, die aus den Alkyl-, Cycloalkyl-Aralkyl- und Arylradikaler besteht.

4. Zusammensetzung nach Anspruch 1, dadurch gekennzeichnet, daß die mehrfunktionelle Radikalenkombination $R_3$—Y von der Gruppe von Verbindungen abgeleitet ist, die aus dem Ethylenglykol, Propylenglykol, 1,3-Propandiol, Butandiol, Pinocol, Glycerin, Pentarythritol, Cyclopentandiol, Cyclohexandiol, Hydrobenzoin, Hydrochinon, Catechol, Resorcinol und Tetrahydroxynaphthalin bestehen.

5. Zusammensetzung nach Anspruch 1, dadurch gekennzeichnet, daß die mehrfunktionelle Radikalenkombination $R_3$—Y von der Gruppe von Verbindungen abgeleitet ist, die aus dem Tetramethylendiamin, Phenylendiamin, tetraaminonaphthalin, Triaminobenzol, Aminoethanol und deren N-Methylderivaten besteht.

6. Zusammensetzung nach Anspruch 1, dadurch gekennzeichnet, daß $R_1$ H ist und daß $R_2$ eine Alkylengruppe mit 2 bis 18 Kohlenstoffatomen ist.

7. Zusammensetzung nach Anspruch 1, dadurch gekennzeichnet, daß $R_2$ eine Alkylengruppe mit 4 bis 10 Kohlenstoffatomen ist.

8. Zusammensetzung nach Anspruch 1, dadurch gekennzeichnet, daß $R_2$ eine Alkylengruppe mit 8 Kohlenstoffatomen ist.

9. Verfahren, in dem eine Zusammensetzung bestrahlt wird, die ein Fluorpolymer enthält, das aus der Gruppe ausgewählt ist, die aus den Ethylen-Tetrafluorethylen-Copolymeren, den Ethylen-Chlortrifluoethylen-Copolymeren, den Polyvinylidenfluorid-Homopolymeren, den Tetrafluorethylen-Vinylidenfluorid-Copolymeren, den Tetrafluorethylen-Hexafluorpropylen-Copolymeren und den Vinylidenfluorid-Hexafluorpropyloen-Polymeren besteht, sowie einen Strahlungssensibilisator der Formel

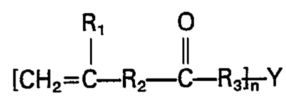

in der

Y ein Kohlenwasserstoff ist,

$R_3$ —O—, >NR oder ein Gemisch derselben ist,

$R_2$ ein Alkylendiradikal mit 2 bis 18 Kohlenstoffatomen oder ein Cycloalkylen-, Aralkylen- oder Arylendiradikal mit 1 bis 16 Kohlenstoffatomen ist;

$R_1$ H oder Methyl ist.

R H ist oder eine Alkylgruppe mit 1 bis 4 Kohlenstoffatomen und

m gleich 2 bis 6 ist.

10. Verfahren nach Anspruch 9, dadurch gekennzeichnet, daß die Zusammensetzung vor ihrer Bestrahlung schmelzbehandelt wird.

**Revendications**

1. Une composition comprenant un fluoropolymère et un radiosensibilisateur répondant à la formule

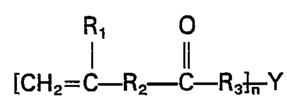

dans laquelle

Y est un reste d'hydrocarbure;

$R_3$ est —O—, >NR, ou leurs mélanges;

$R_2$ est un diradical alkylène en $C_2$—$C_{18}$ ou un diradical cycloalkylène, arylalkylène ou arylène en $C_1$—$C_{16}$;

$R_1$ est H ou méthyle;

R est H ou un groupe alkyle en $C_1$—$C_4$; et

n est de 2 à 6.

2. La composition selon la revendication 1, dans laquelle le fluoropolymère est choisi parmi les copolymères éthylène-tétrafluoroéthylène, les copolymères éthylènè-chlorotrifluoroéthylène, les homopolymères de fluorure de polyvinylidène, les copolymères tétrafluoroéthylène-fluorure de vinylidène, les copolymères tétrafluoroéthylène-hexafluoropropylène et les polymères fluorure de vinylidène-hexafluoropropylène.

3. La composition selon la revendication 1, dans laquelle Y est dérivé des groupes constitués par les radicaux alkyles, cycloalkyles, arylalkyles et aryles.

4. La composition selon la revendication 1, dans laquelle le radical polyfonctionnel combinaison de $R_3$ et Y dérive de composés choisis parmi l'éthylèneglycol, le propylène-glycol, le 1,3-propanediol, le butanediol, le pinacol, le glycérol, le pentaérythritol, le cyclopentanediol, le cyclohexanediol, l'hydrobenzoïne l'hydroquinone, le catéchol, le résorcinol et le tétrahydroxynaphtalène.

5. La composition selon la revendication 1, dans laquelle radical polyfonctionnel combinaison de $R_3$ et Y dérive de composés choisis parmi la tétraméthylènediamine, la phénylènediamine, le tétraaminonaphtalène, le triaminobenzène, l'aminoéthanol et leurs dérivés N-méthylés.

6. La composition selon la revendication 1, dans laquelle $R_1$ est H et $R_2$ est un groupe alkylène en $C_2$—$C_{18}$.

7. La composition selon la revendication 1, dans laquelle $R_2$ est un groupe alkylène en $C_4$—$C_{10}$.

8. La composition selon la revendication 1, dans laquelle $R_2$ est un groupe alkylène en $C_8$.

9. Un procédé comprenant l'étape d'irradiation d'une composition comprenant un fluoropolymère choisi parmi les copolymères éthylène-tétrafluoroéthylène, les copolymères éthylènechloro-trifluoroéthylène, les homopolymères de fluorure de polyvinylidene, les copolymères tétrafluouro-éthylène-fluorure de vinylidène, les copolymères tétrafluoroéthylène-hexafluoropropylène et les polymères fluorure de vinylidène-hexafluoropropylène et un radio sensibilisateur de formule

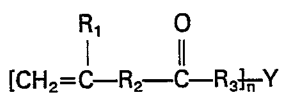

dans laquelle

Y est un reste d'hydrocarbure;

$R_3$ est —O—, >NR, ou leurs mélanges;

$R_2$ est un diradical choisi parmi les diradicaux alkylènes, cycloalkylènes, arylalkylène arylène en $C_1$—$C_{16}$;

$R_1$ est H ou méthyle;

R est H ou un groupe alkyle en $C_1$—$C_4$; et

n est de 2 à 6.

10. Le procédé selon la revendication 9 comprenant en outre l'étape de traitement en fusion de la composition avant l'étape d'irradiation.